# EUROPEAN PATENT APPLICATION

(11) **EP 1 961 330 A1**
(43) Date of publication of application: **27.08.2008**
(21) Application number: 07103014.2
(22) Date of filing: 23.02.2007
(51) Int. Cl.: A47B 57/54, F16B 12/40, F16B 12/42

(54) **Assembly apparatus**

(71) Applicant: VIBO S.p.A., 36071 Arzignano (IT)
(72) Inventor: Bonin, Franco, Chiampo (VI) 36072 (IT)
(74) Representative: Feltrinelli, Secondo Andrea

(57) **Abstract**

An apparatus for assembling an object (50) to an elongate element (40) associable with a furniture, comprises fixing means (2, 3) comprising fixing means (2, 3) coupled to said elongate element (40) in a assembly configuration and arranged for supporting and blocking said object (50), said fixing means (2, 3) being dismountable in such a way that they can be mounted on or dismounted from said elongate element (40) according to a direction transverse to an axis (X) thereof.

## Description

The invention concerns an apparatus for assembling objects to a piece of furniture, in particular for connecting objects to an elongated element of a piece of furniture.

Pieces of furniture, such as cupboards, cabinets, kitchen units and the like, are known that are provided with elongated elements, e.g. columns or poles, which vertically extend and support a plurality of objects, typically containers such as wire baskets, boxes, shelves and similar that are suitable for accommodating items of different types, for example tools, fitting, food, etc.

The containers are connected to the pole by means of assembly apparatuses that usually comprise bushes and rings, inserted in the pole and fixed thereto. In particular, each container is coupled to the pole (typically a cylindrical shaft) a sleeve or hub thereof engaging a defined portion of the pole.

A metallic annular bush is inserted in the pole and fixed thereto in a desired position along the latter, for supporting the container. Between the metallic bush and the container sleeve a ring made of nylon or similar synthetic material is usually provided, so that the container can be rotate frictionless around the pole. A rotatable container makes easier to insert and remove items.

For each pole during the assembly it is necessary to mount in sequence, starting from a pole bottom, a metallic bush, a nylon ring, a container, a further nylon ring, a further metallic bush. This sequence must be repeated for all containers to be mounted on the same pole.

The assembly can be very complicated when the pole has to be inserted inside a piece of furniture into a space that is narrow and/or difficult to reach, such as for example a corner cabinet of kitchen units. In this case, the containers, with the related bushes and rings, cannot be pre-assembled on the pole before the insertion thereof in the cabinet. At the contrary, the whole assembly, which includes pole, containers, bushes, rings, has to be mounted directly inside the cabinet, this causing more troubles and inconveniences for the operators.

Another drawback of said assembly apparatus consists in that if during the assembly a component is forgotten, e.g. a nylon ring or a metallic bush or even a particular container, the assembly sequence must be repeated from the beginning.

Likewise, if during the use, one or more containers have to be removed or added, it is necessary to dismount partially or totally the assembly, taking out the latter from the piece of furniture or dismounting the assembly directly inside the piece of furniture.

An object of the invention is to improve the apparatuses for assembling objects, for example containers, to elongated elements, such as columns or pole, associated with pieces of furniture.

Another object of the invention is to provide an assembly apparatus that considerably simplify an operation sequence for assembling and/or disassembling objects to/from an elongated element, so as to reduce the time required and thus the assembly cost.

A further object is to obtain an apparatus for assembling easily and quickly objects to a pole even by non-skilled operators.

A still further object is to provide an assembly apparatus, which permits a flexible and adaptable assembly of objects and is at the same time strong, reliable and economical.

According to the invention, an apparatus is provided for assembling an object to an elongate element associable with a piece of furniture, comprising fixing means coupled to said elongate element in a assembly configuration and arranged for supporting and blocking said object, characterized in that said fixing means are dismountable in such a way that they can be mounted on or dismounted from said elongate element according to a direction transverse to a longitudinal axis of said elongate element.

The fixing means comprises a locking ring that is mounted on the elongate element and fixed thereto and a sleeve that is mounted on and coupled to the locking ring and supports the object. A bush can be provided which is associated to the objects and is externally inserted over said sleeve.

The locking ring is dismountable in at least two ring parts and the sleeve is dismountable in at least two sleeve parts, both locking ring and sleeve being dismountable along said transverse direction with respect to a plane substantially parallel to said longitudinal axis.

Owing to the invention, objects can be assembled to, or disassembled from, the elongated element in a very easy and rapid way, since it is no necessary to remove neither the elongated element from the furniture nor the object already mounted. Therefore it is possible to reduce the time required for assembly/disassembly and consequently the overall cost. Besides, even non-skilled operators can easily and quickly perform the assembly or disassembly procedures.

The sleeve comprises seat means suitable for containing the locking ring and provided with mating surfaces shaped in such a way to abut on and/or complementary engage an upper operative surface of said locking ring in the assembly configuration. The locking ring comprises two opposed annular end surfaces, which selectively act as upper operative surface depending on how the locking ring is mounted on the elongated element.

According to the shapes of said mating surfaces and annular end surfaces a plurality of different assembly configurations can be achieved, so that the sleeve and the object associated thereto can be moved and/or positioned in different way with respect to the locking ring and the elongated element.

The invention can be better understood and implemented with reference to the attached drawings that illustrate some embodiments thereof by way of non-limiting example, in which:
Figure 1 is a perspective exploded view of the apparatus for assembling objects according to the invention;
Figure 2 is a perspective partial exploded view of the apparatus of Figure 1, showing a locking ring to be inserted into a sleeve in a first assembly configuration;
Figure 3 is a perspective partial exploded view of the apparatus of Figure 1, showing the locking ring to be inserted into the sleeve in a second assembly configuration;
Figure 3A is a longitudinal cross section of the locking ring of Figure 1;
Figures 4A and 4B are longitudinal cross sections of the apparatus of Figure 1 in the second assembly configuration;
Figure 4C is an enlarged view of a detail of Figure 4A;
Figure 4D is a perspective view of the apparatus of Figure 1;
Figure 5A is a perspective exploded view of the sleeve of Figure 1;
Figure 5B is a lateral view of a part of the sleeve of Figure 5A;
Figure 6 is a perspective partial exploded view of the apparatus of Figure 1, showing a further locking ring to be inserted into the sleeve in a third assembly configuration;
Figure 7 is a perspective exploded partial view of the apparatus of Figure 1, showing the further locking ring to be inserted into the sleeve in a fourth assembly configuration;
Figure 8 is a longitudinal cross section of the further locking ring of Figure 7;
Figure 9 is a perspective view of a bush of the apparatus;

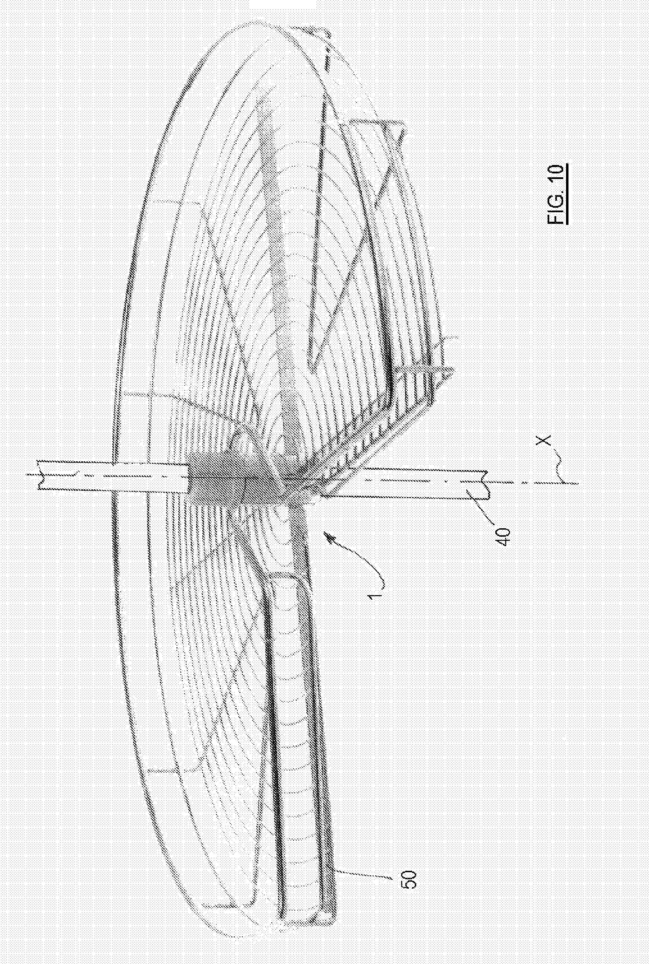

Figure 10 is a perspective partial view of a container coupled to an elongate element by means of the apparatus of Figure 1.

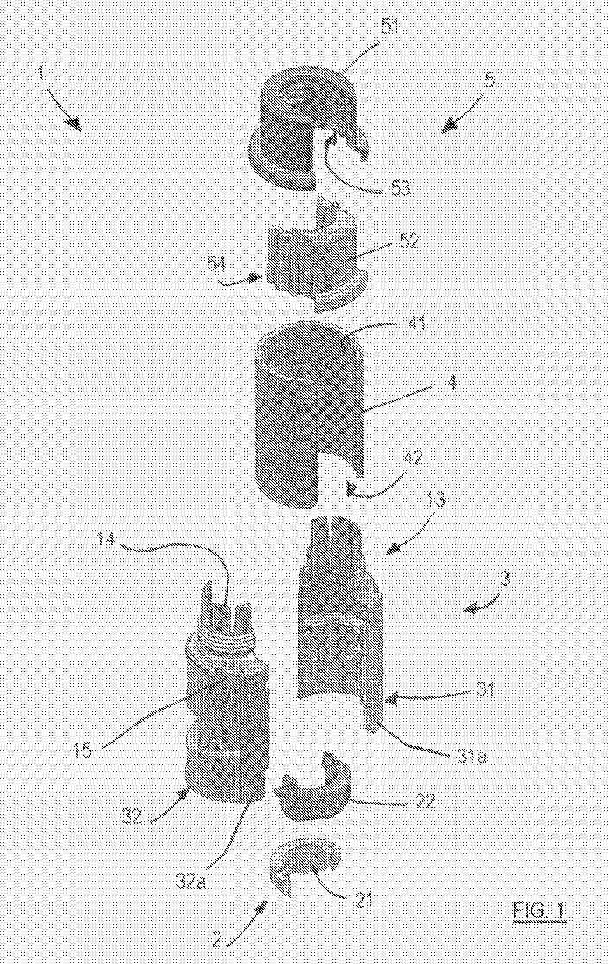

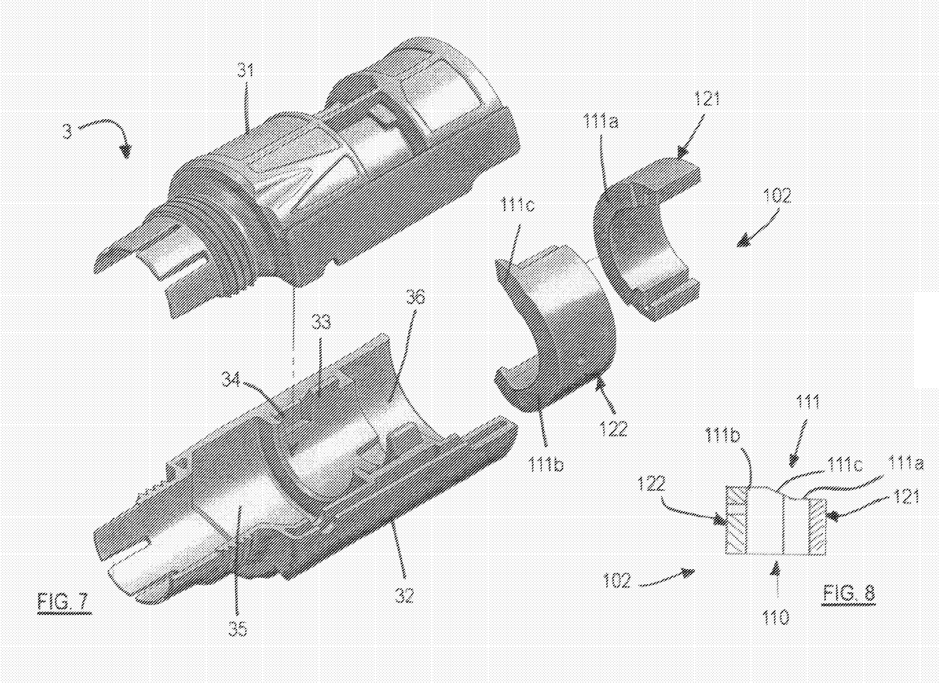

With reference to Figures 1 and 8, an apparatus 1 is provided for assembling an object 50 to an elongated element 40 associated with a piece of furniture, such as a cupboard, a cabinet, a kitchen unit and similar. The object 50 is for example a container, such as a wire basket or a shelves; the elongated element 40 is a pole or a column, in particular a cylindrical shaft of the type used inside furniture for supporting containers.

The apparatus 1 comprises fixing means 2, 3 arranged for removably connecting the container 50 to the pole 40. The fixing means includes a locking ring 2, suitable to be mounted on the pole 40 and fixed thereto, and a hollow sleeve 3 arranged for engaging both the locking ring 2 and the pole 40. The locking ring 2 is fixed to the pole 40 at a desired position along the latter and supports and maintains in position the sleeve 3 and the container 50.

The apparatus 1 further comprises a bush 4 to which the container 50 is associated. The bush 4 can be externally inserted over the sleeve and removably locked thereto so as to firmly connect the container 50 to the fixing means in a desired assembly configuration of the apparatus 1. The bush 4 acts as a hub for the container 50.

Nevertheless the container 50 can be directly coupled to the sleeve 3 by means of suitable means, i.e. pins or screws or bolts.

The locking ring 2 and the sleeve 3 are dismountable in such a way that they can be easily and quickly mounted on or dismounted from the pole 40 according to a direction transverse to a longitudinal axis X of the latter. In particular, locking ring 2 and the sleeve 3 are dismountable in two respective parts along a plane substantially parallel to said longitudinal axis X. In this way, it is possible to insert the locking ring 2 and the sleeve 3 without dismounting the pole 40 which can remain fixed to the piece of furniture.

Locking ring 2 comprises a first ring part 21 and a second ring part 22 which can be positioned over the pole 40, partially surrounding it, and then mutually interconnected.

The ring parts 21, 22 have joint means 23, 24, such as dap-joint, that enables a steady and reversible connection of said parts. Such joint means comprises, for example, one or more tongues 23 provided in the first ring part 21 and one or more corresponding and complementary grooves 24 provided in the second ring part 22.

The locking ring 2 when assembled and mounted on the pole 40 can be removably fixed thereto by means of a security dowel, of known type and not shown in figures, inserted in a suitable hole of second ring part 22. In this way the locking ring 2 cannot rotate around the pole 40 nor slide along it.

The sleeve 3 comprises a first sleeve part 31 and a second sleeve part 32, said sleeve parts 31, 32 being provided with clasping means 33 that permit to couple removably and quickly each part 31, 32 to the pole 40.

Clasping means comprises a couple of flexible projections 33 provided in the inner part of each sleeve part 31, 32 and configured so as to elastically clasp and engage the pole 40. The couple of flexible projections 33 form a snap joint. Each sleeve part 31, 32 is internally provided with recesses 34 arranged for receiving the flexible projections 33 of the other sleeve part 32, 31, when the sleeve 3 is assembled around the pole 40.

The sleeve 3 is internally provided with two seats 35, 36 arranged for selectively accommodating the locking ring 2, when said sleeve 3 is assembled around the pole 40 and encloses the locking ring 2. Each seat 35, 36 has a respective mating surface 38, 39 which is arranged for engaging an upper operative surface of the locking ring 2.

The locking ring 2 comprises two opposed annular end surfaces 10, 11 that may have different shapes. The locking ring 2 can be mounted on the pole 40 so that selectively one of opposed annular end surfaces 10, 11 acts as upper operative surface.

The annular end surfaces 10, 11 of locking ring 2 and the mating surfaces 38, 39 of seats 35, 36 can be designed so as to enable a free rotation of the sleeve 3, and thus of the container 50, providing no angular reference, or a single angular reference, or a defined number of angular reference, or to lock the sleeve 3 in a defined stop position. In other words, the locking ring 2 acts as a cylindrical cam provided with an annular track for supporting and angularly orienting the sleeve 3.

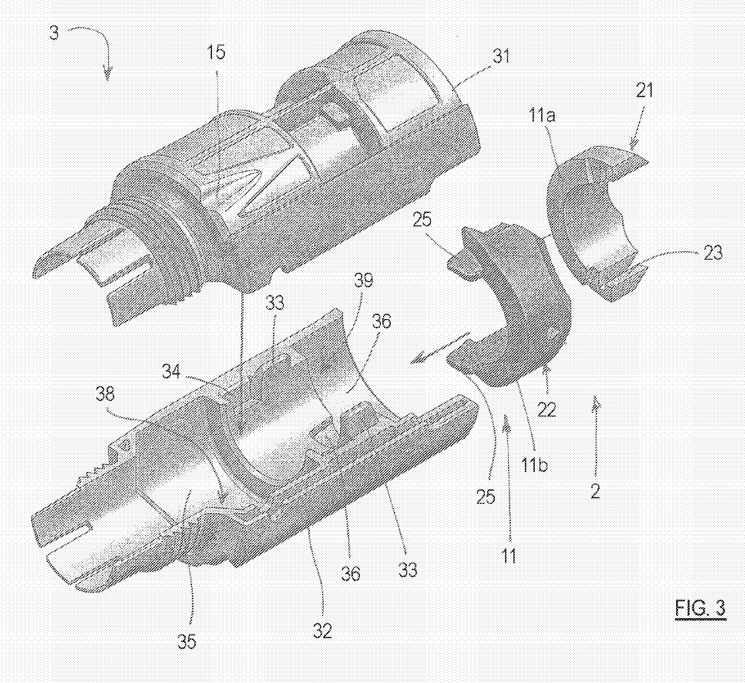

With reference to Figure 1 to 5B, the locking ring 2 comprise a first annular end surface 10 defined by portions 10a, 10b of the two respective ring parts 21, 22. The first end surface 10 is includes a plurality of inclined faces, e.g. five conical faces, separated each other by respective edges. A first seat 35 of the sleeve 3 is provided with a first mating surface 38 complementary to the first annular end surface 10 and having the same plurality of inclined faces.

In a first assembly configuration of the apparatus 1, the first mating surface 38 engages the first annular end surface 10. Each edge with the respective adjacent planes defines one of the possible angular position in which the sleeve 3 can be rotated with respect to the locking ring 2. Thus the container 50 can be rotated according to a defined discrete number of angular positions. When the container 50 is rotated between two adjacent positions, it is also lifted because the inclined faces. The torque applied for rotating the container thus must overcome the weight thereof.

The first assembly configuration is useful, for example, in the case of circular or semicircular baskets having a plurality of sectors or in the case of containers having different working position.

The number of faces and edges of first annular end surface 10 and of first mating surface 38 depends on the number of positions required for the container to be mounted.

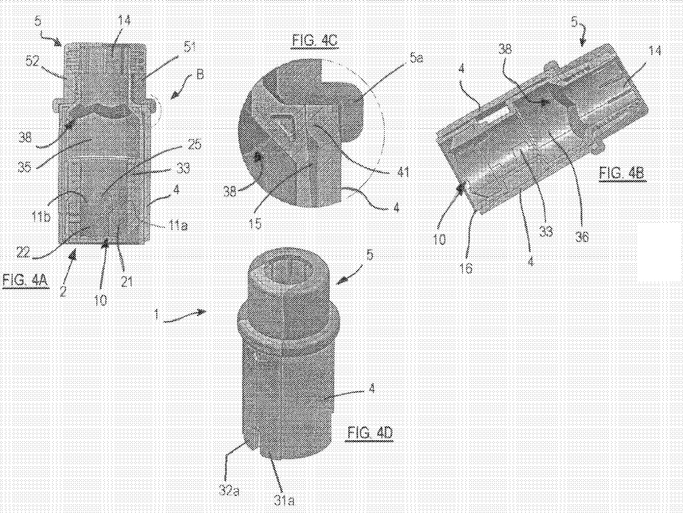

The locking ring 2 includes a second annular end surface 11 comprising two portions 11a, 11b substantially flat and provided respectively on the first ring part 21 and on the second ring part 22. The two flat portions 11a, 11b lay on respective planes that are parallel and spaced each other by a defined distance, said planes being substantially perpendicular to a longitudinal axis of said locking ring 2 (Figure 4A).

The second ring part 22 is further provided with one or more locking teeth 25, substantially parallel to the longitudinal axis of locking ring 2.

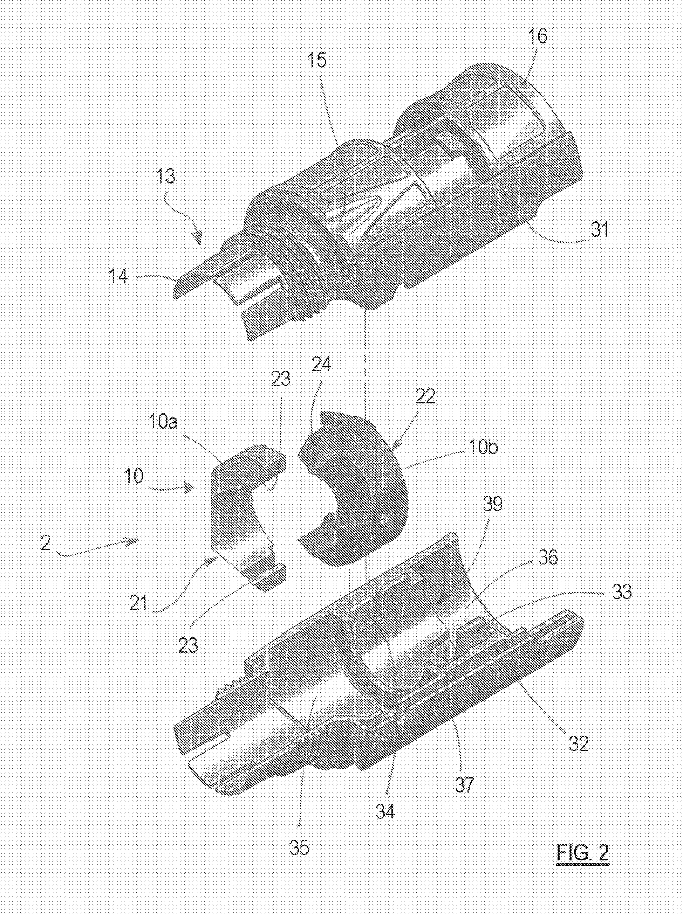

A second seat 36 of the sleeve 3 is configured for accommodating the locking ring 2, in a second assembly configuration B of apparatus 1 wherein said locking ring 2 is mounted on the pole 40 overturned with respect to the first assembly configuration of Figure 2.

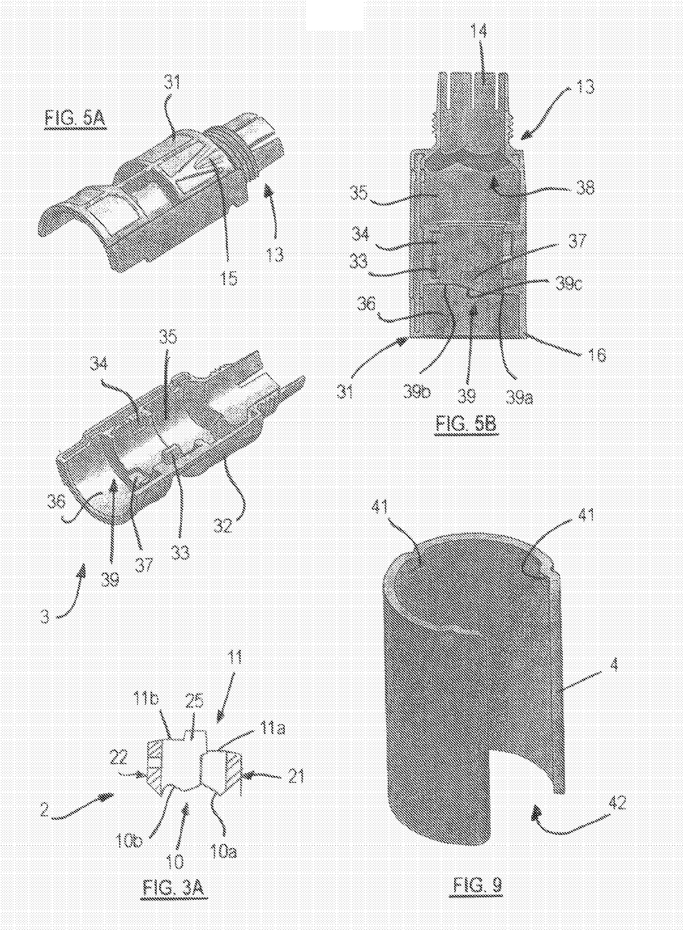

The second seat 36 comprises a second mating surface 39 provided with two respective substantially flat portions 39a, 39b which correspond to the flat portions 11a, 11b of locking ring 2. Said flat portions 39a, 39b are joined by means of two inclined portions 39c (Figure 5B).

The second seat 36 also includes indentations 37 suitable for receiving the locking teeth 25 of locking ring 2 so as to block a rotation of the sleeve 3 around the pole 40, defining a stop position of the container 50.

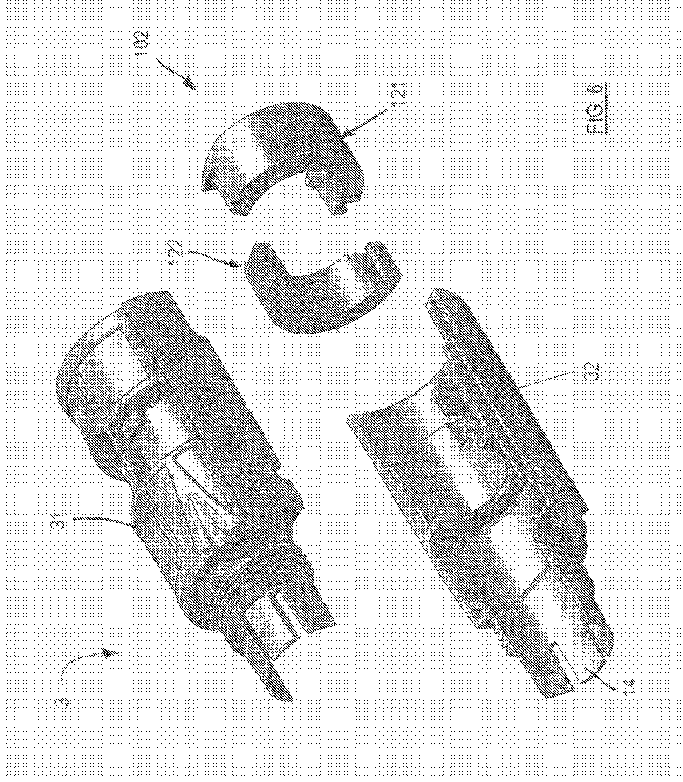

With reference to Figures 6 to 8, fixing means comprises a further locking ring 102 that is dismountable in two respective parts 121, 122 and is provided with a couple of further opposed annular end surfaces 110, 111.

A further first annular end surface 110 is an annular surface substantially flat on which the second mating surface 39 of sleeve 3 abuts in a third assembly configuration. In particular, a lower flat portion 39a of the second mating surface 39 abuts on said further first end surface 110, so that the sleeve 3 can rotate freely around the pole 40. The third assembly configuration can be used, for example, with a rounded basket that does not have preferential angular positions.

The further first end surface 110 can be slightly conic in order to take up a slack which may exist between the further first end surface 110 and the second mating surface 39.

The further locking ring 102 further comprises a further second annular end surface 111 having two substantially flat further portions 111a, 111b, provided on the respective parts 121, 122. The two further flat portions 111a, 111b lay on respective planes that are parallel, spaced and substantially perpendicular to a longitudinal axis of said further locking ring 102 (Figure 8). Said further flat portions 111a, 111b are joined by means of two respective inclined portions 111c.

The further first end surface 110 is substantially complementary to second mating surface 39.

In a fourth assembly configuration, the second mating surface 39 abuts on the further second end surface 111. The sleeve 3 can be rotated around the pole 40 but only a single stable angular position is defined when the two surfaces 39, 111 are integrally engaged.

The fourth assembly configuration can be used, for example, with a three-quarter basket that can be rotated but requires a preferential angular position.

The forth annular end surfaces 10, 11, 110, 111 described above for the locking rings 2, 102 can be differently combined in a still further locking ring.

The sleeve 3 can be secured to the pole 40 by means of a ring nut 5 which can be screwed on an end portion 13 of said sleeve 3.

The ring nut 5 is dismountable in two respective parts 51, 52 so as to be easily inserted laterally in the pole 40. The parts 51, 52 are provided with respective joint means 53, 54, such as a dap-joint, that enables a steady and reversible connection of the ring nut 5.

The sleeve 3 further includes adjusting means 14 for fitting the inner diameter of sleeve 3 on the effective external diameter of the pole 40, so as to take up a slack due to manufacturing and/or assembly of apparatus 1.

Adjusting means comprises a plurality of flexible tabs 14 that can be bent inwards into the pole 40 by screwing the ring nut 5 so as to block the sleeve 3 against the pole 40.

An external surface of the sleeve 3 comprises a plurality of notches 15, which are peripherally arranged close to the end portion 13, for receiving inner protuberances 41 carried out in an upper end portion of the bush 4. The notches 15 are divergent towards the end portion 13.

When the ring nut 5 is coupled to the end portion 13, an external rim 5a of said ring nut 5 pushes the inner protuberances 41 inside the respective notches 15 in order to tightly lock the bush 4 to the sleeve3.

The remaining end portion 16 of the sleeve is slightly conical outward for better receiving the lower portion of the bush 4.

The bush 4 has a longitudinal opening 42 having a width greater than a pole diameter so that said bush 4 and a container 50 associated thereto can be inserted laterally on the pole 40, according to a direction transverse to its longitudinal axis. The associated container 50 is for example a non-round basket, such as a semi-lunar or a three-quarter shaped basket.

The sleeve parts 31, 32 comprise respective longitudinal protrusions 31a, 32a arranged for engaging the longitudinal opening 42 of the bush 4 in an assembly configuration, so as to prevent a relative rotation of said bush around the sleeve 3.

A sequence for assembly and locking a container 50 to the pole 40 using the apparatus 1 of the invention, comprises at first positioning the two ring part 21, 22 of the locking ring 2 along the pole 40 and then shifting one part towards the other until the joint means 23, 24 are engaged so as to form a steady connection. The locking ring 2 so assembled is then secured in the desired position along said pole by means of a security dowel.

The locking ring 2 is assembled to the pole 40 by selecting as upper operative surface the annular end surface 10, 11 required for the assembly configuration needed.

The two sleeve parts 31, 32 of the sleeve 3 are mounted around the pole 40, the locking ring 2 being accommodated in one of the two seats 35, 36, according to the assembly configuration selected for the container to be mounted. The mating surface 38, 39 of the selected seat 35, 36, abuts on the annular end surface 10, 11 of the locking ring 2.

Each sleeve part 31, 32 can be easily and quickly fasten to the pole 40 thanks to the clasping means 33.

At this point, the bush 4 and the container 50 associated thereto can be mounted externally on the sleeve 3. The angular relative position between bush 4 and sleeve 3 is defined by engaging the inner protuberances 41 of the bush 4 with respective notches 15 of the external surface of sleeve 3.

The bush 4 can be inserted laterally on the pole 40 if it is provided with the longitudinal opening 42. In this case, the longitudinal protrusions 31a, 32a of the sleeve 3 engage the longitudinal opening 42 of the bush 4.

Finally, the ring nut 5 is mounted around the pole 40 by assembling and connecting its two respective parts 51, 52. The ring nut 5 so assembled is then screwed on the end portion 13 of the sleeve 3 so as to lock the latter to the pole 40. At the same time, the ring nut 5 by means of its external rim 5a tightly secures the bush 4 to the sleeve 3.

The assembly sequence above described can be repeated for all the containers to be mounted to the pole 40.

It should be noted that owing to the dismountable fixing means 2, 3 it is possible to assembly and disassembly containers 50 in a very easy and quick way since it is no necessary to remove the pole 40 from the furniture associated thereto. At the same time, fixing means 2, 3 provides a plurality of different assembly configurations so as to move and/or position a set of containers according to different operating requirement.

## Claims

1. Apparatus for assembling an object (50) to an elongate element (40) associable with a piece of furniture, comprising fixing means (2, 3) coupled to said elongate element (40) in a assembly configuration and arranged for supporting said object (50), **characterized in that** said fixing means (2, 3) are dismountable in such a way that they can be mounted on or dismounted from said elongate element (40) according to a direction transverse to an longitudinal axis (X) thereof.

2. Apparatus according to claim 1, wherein said fixing means (2, 3) are dismountable with respect to a plane substantially parallel to said longitudinal axis (X).

3. Apparatus according to claim 1 or 2, wherein said fixing means comprises a locking ring (2; 102) and a sleeve (3), in said assembly configuration said locking ring (2; 102) being fixed to said elongate element (40) and said sleeve (3) being coupled to said locking ring (2; 102) and arranged for supporting said object (50).

4. Apparatus according to claim 3, wherein said locking ring (2; 102) is dismountable in at least two ring parts (21, 22; 121, 112) and said sleeve (3) is dismountable in at least two sleeve parts (31, 32).

5. Apparatus according to claim 4, wherein said ring parts (21, 22; 121, 112) comprise joint means (23, 24) for reversibly and mutually connecting said ring parts.

6. Apparatus according to 4 or 5, wherein each sleeve part (31, 32) comprises clasping means (33) for elastically coupling said sleeve part (31, 32) to said elongated element (40).

7. Apparatus according to any one of claims 3 to 6, wherein said sleeve (3) comprises seat means (35, 36) arranged for accommodating said locking ring (2; 102) and provided with respective mating surfaces (38, 39) shaped in such a way to mate an upper operative surface of said locking ring (2; 102) in said assembly configuration.

8. Apparatus according to claim 7, wherein said locking ring (2; 102) comprises two opposed annular end surfaces (10, 11; 121, 122), the annular end surface (10, 11; 121, 122) facing upward, when said locking ring (2) is mounted on said elongated element (40), acting as upper operative surface.

9. Apparatus according to claim 8, wherein said seat means (35, 36) includes a first seat (35) provided with a first mating surface (38) substantially complementary to one of said annular end surfaces (10) of said locking ring (2), said first mating surface (38) and said annular end surface (10) being shaped so as to define a plurality of angular positions in which said sleeve (3) can be positioned with respect to said locking ring (2).

10. Apparatus according to claim 9, wherein said first mating surface (38) and said annular end surface (10) comprise a plurality of inclined faces separated by respective edges, each edge with the adjacent faces defining one of said angular positions.

11. Apparatus according to any one of claims 7 to 10, wherein said seat means (35, 36) comprises a second seat (36) provided with a second mating surface (39) that includes two annular portions (39a, 39b) substantially flat and joined by means of two inclined portions (39c).

12. Apparatus according to claim 11, wherein said annular portions (39a, 39b) are parallel, spaced and substantially perpendicular to a respective longitudinal axis of said sleeve (3).

13. Apparatus according to claim 11 or 12, when claim 11 is appended to any one of claims 8 to 10, wherein one of said annular end surfaces (11; 122) of said locking ring (2) is substantially complementary to said second mating surface (39), said annular end surface (11; 122) and said second mating surface (39) being engaged in said assembly configuration so as to define a single angular position in which said sleeve (3) can be positioned with respect to said locking ring (2).

14. Apparatus according to claim 11 or 12, when claim 11 is appended to any one of claims 8 to 10, wherein one of said annular end surfaces (121) of said locking ring (2) is substantially flat, said second mating surface (39) abutting on said annular end surface (121) in said assembly configuration so that the sleeve (3) can be rotated freely with respect to said locking ring (2).

15. Apparatus according to claim 13 or 14, wherein said annular end surface (11) is provided with tooth means (25) arranged for engaging indentation means (37) provided in said second seat (36) so as to prevent in said assembly configuration said sleeve (3) to rotate with respect to said locking ring (2).

16. Apparatus according to any preceding claim, comprising a ring nut (5) arranged for engaging an end portion (13) of said sleeve (3) so as to removably fasten said sleeve (3) to said elongated element (40).

17. Apparatus according to claim 17, wherein said sleeve (3) comprises adjusting means (14) operated by said ring nut (5) for fitting said sleeve (3) to said elongated element (40).

18. Apparatus according to any preceding claim, comprising a bush (4) associated to said object (50), said bush (4) being coupled to and surrounding said sleeve (3) in said assembly configuration.

19. Apparatus according to claim 18, wherein said bush (4) comprises protuberance means (41) arranged for engaging notch means (15) of said sleeve (3) so as to fix said bush (4) with respect to said sleeve (3).

20. Apparatus according to claim 18 or 19, wherein said bush (4) comprises a longitudinal opening (42) having a dimension greater that a diameter of said elongated element (40) so that said bush (4) can be insert laterally on said elongated element (40) according to a direction transverse to said axis (X) thereof.

21. Apparatus according to claim 20, wherein said sleeve (3) comprises protrusion means (31a, 32a) arranged for engaging said longitudinal opening (42) in said assembly configuration.

22. Apparatus according to any one of claims 18 to 21, when claim 18 is appended to claim 16, wherein said bush (4) is lockable to said sleeve (3) by means of said ring nut (5).
